# EUROPEAN PATENT APPLICATION

(11) **EP 4 711 214 A1**
(43) Date of publication of application: **18.03.2026**
(21) Application number: 24200434.9
(22) Date of filing: 14.09.2024
(51) Int. Cl.: B60T 1/00, B60T 1/06, F16H 63/34

(54) **BRAKE ACTUATOR WITH PARK BRAKE FUNCTION**

(71) Applicant: KB Intellectual Property GmbH & Co. KG, 82049 Pullach (DE)
(72) Inventor: SZABO, Gergely, 1125 Budapest (HU); HÖS, Levente, 1047 Budapest (HU); KOKREHEL, Csaba, 1119 Budapest (HU); LÖRINCZI, Ottó Botond, 1038 Budapest (HU); SZABO, Janos, 1101 Budapest (HU); URBAN, Matyas, 2638 Kemence (HU); NEMETH, Huba, 1116 Budapest (HU); TÖREKI, Gábor, 2030 Erd (HU); TOTH-KATONA, Tamas, 1039 Budapest (HU)

(57) **Abstract**

The park brake actuator (11) features a ratchet wheel (1) attached to a dynamic brake actuator shaft (14), with a sawtooth pattern for engagement. A hinged locking pawl (2) interacts with the ratchet wheel (1) to maintain the brake in a locked state. The actuator includes a bistable electro-magnetic actuator (5) with a rod (5a) that holds two stable positions without external power. The connection element (4) links the electro-magnetic actuator rod (5a) and the locking pawl (2), allowing the electro-magnetic actuator (5) to move the locking pawl (2) between locked and unlocked positions. In the locked position, the locking pawl (2) prevents rotation of the shaft (14) in one direction by engaging with the steep side of the ratchet wheel (1), while allowing rotation in the opposite direction via the curved side (1a) of the ratchet wheel (1).

## Description

The invention relates to brake actuators with a park brake function for a driven vehicle, in particular for a commercial vehicle.

Until now, the state of the art in brake actuators with park brake function has been characterized by a park brake actuator that is coaxially arranged and moves axially. Several implementations of a bistable park brake actuator that can maintain an active park brake position and a passive rest position without the need for further energy supply are known. The actuator achieves this by causing a force transmitting engagement between the dynamic actuator and the park brake actuator, which is then maintained independently of any additional energy supply or actuation forces generated by either actuator.

Document WO 2020 057 928 A1 discloses a brake assembly with a dynamic actuator for service braking and a second actuator for the park brake, where the park brake actuator is coaxially arranged and bistable, allowing it to maintain two stable operation states without further energy supply.

However, this design presents issues, including the difficulty of manually releasing the park brake with external mechanical tools.

A park brake actuator mechanism that employs radial movement instead of conventional coaxially and axially moving actuators is desirable. Moreover, it is desirable to enable a manual release of the park brake using simple mechanical tools without the need for external electric supply, which is a feature desired by legislation (e.g. UN R13) but not easily solved by current electro-mechanic brake solutions.

Against this background, it is the object of the present invention to provide a shorter park brake actuator in axial direction that allows for manual release in the event of failure of the brake actuator supply or control, which is not adequately solved by existing technologies of current electro-mechanic brake solutions, but only by conventional pneumatic spring brake actuators.

The object is achieved by a park brake actuator according to claim 1, a method for manually releasing the park brake actuator according to claim 15, and a vehicle according to claim 16. Advantageous further developments are included in the dependent claims.

According to an aspect of the invention, a park brake actuator comprises a park brake ratchet wheel fixed to a shaft of a transmission of a dynamic brake actuator, wherein the park brake ratchet wheel comprises at least one working tooth having a first radially outwardly curved side and a second steep outwardly projecting side and a park brake locking pawl, wherein the park brake locking pawl is hingedly fixed and a bistable electro-magnetic actuator with a moving rod capable of holding two stable positions without continuous energy supply, wherein the bistable electro-magnetic actuator can move the park brake locking pawl into a stable locked or a stable unlocked position, wherein the park brake locking pawl is interlockable with the park brake ratchet wheel to maintain a locked state of the park brake actuator and wherein in the stable locked position a mechanical rotation of the shaft in a first direction, which corresponds to the direction of rotation of the shaft for releasing an actuating force of the dynamic brake actuator, is blocked by the interlocked park brake locking pawl resting against the second steep outwardly projecting side of the park brake ratchet wheel, but wherein a mechanical rotation of the shaft in a second direction which is opposite to the first direction is executable by moving the first radially outwardly curved side of the park brake ratchet wheel relative to the park brake locking pawl.

This provides a park brake actuator that is shorter in an axial direction of the park brake shaft and still enables simple and reliable manual actuation in addition to the electronic actuation of the park brake.

An advantageous implementation of the park brake actuator further comprises a first stable state and a second stable state, wherein a displacement of the park brake locking pawl by the height of the second steep outwardly projecting side causes the bistable electro-magnetic actuator to switch from the first stable state to the second stable state, wherein preferably the first stable is an unlocked state so that park brake ratchet wheel can move freely and wherein the second stable state is a locked state so that the park brake ratchet wheel cannot move freely, wherein more preferably this displacement can be performed by manually rotating the park brake ratchet wheel by rotating the shaft, wherein even more preferably a mechanical rotation of the shaft in the second direction leads the bistable electro-magnetic actuator into the first stable state, once the park brake locking pawl is positioned on a radially outermost end of a tooth of the park brake ratchet wheel, wherein the teeth of the park brake ratchet wheel are formed with a sawtooth pattern.

The technical advantages of the described embodiment of the park brake actuator include the ability to maintain a locked or unlocked state without continuous energy supply, which enhances reliability.

A further advantageous implementation of the park brake actuator further comprises a connection element fixed to the moving rod of the electro-magnetic actuator and the park brake locking pawl and preferably a housing for fixing and guiding the park brake locking pawl, a pawl pin, the connection element, the bistable electro-magnetic actuator, a compression spring, a sensor and/or a sensor magnet.

A further advantageous implementation of the park brake actuator further comprises a compression spring fixed to the housing and to the park brake locking pawl, wherein preferably the compression spring biases the park brake locking pawl into the stable unlocked position, wherein more preferably the compression spring is unloaded when the stable state of the bistable electro-magnetic actuator is reached in the stable unlocked position.

The technical advantages of the described embodiment include increased stability of the unlocked position of the actuator by supporting the solenoid and preventing unintended actuation, easy assembly as one unit, and the option for modularity with or without the parking brake function.

In a further advantageous implementation of the park brake actuator, the bistable electro-magnetic actuator further comprises at least one permanent magnet and at least one electromagnet, wherein preferably the electromagnet is used to move the bistable electro-magnetic actuator in the stable locked or stable unlocked position, and the permanent magnet is used to hold the bistable electro-magnetic actuator in the stable locked or stable unlocked position, wherein more preferably the electromagnet can be controlled via a park brake control unit to activate or deactivate the park brake, wherein even more preferably the permanent magnet and electromagnet are ring-shaped.

The technical advantages of the described embodiment are that the electromagnet can be controlled to move the actuator into stable positions, while the permanent magnet maintains these positions without continuous energy supply, leading to energy efficiency and reliability.

In a further advantageous implementation of the park brake actuator, the bistable electro-magnetic actuator is configured so that no further external energy is required to maintain the stable locked or stable unlocked position.

The technical advantages of the described embodiment include enhanced safety and reliability, as the actuator maintains its position without the need for continuous energy supply or actuation forces. In the event of a failure, the parking brake can therefore be permanently released.

In a further advantageous implementation of the park brake actuator, the magnetic force of the permanent magnet is greater than the spring force of the compression spring.

An advantageous implementation of the described embodiment ensures an increased stability of the unlocked position of the actuator by supporting the solenoid and preventing unintended actuation.

A further advantageous implementation of the park brake actuator further comprises a sensor placed on the housing and a sensor magnet placed on the park brake locking pawl and / or connection element, wherein the sensor is configured to detect a state of the sensor magnet, wherein preferably the state of the sensor magnet indicates a locked or unlocked state of the bistable electro-magnetic actuator.

A technical advantage of implementing sensors to detect the state of the park brake actuator is that it allows for the monitoring of the actuator's locked or unlocked status, which enhances the safety and reliability of the parking brake system by ensuring the correct position is maintained without the need for continuous energy supply.

A further advantageous implementation of the park brake actuator further comprises an external access of the shaft, wherein the external access of the shaft from the outside of the housing is engageable with an external tool.

An advantageous technical aspect of the embodiment is that it allows for the manual release of the parking brake in case of failure of the brake actuator supply or control using simple mechanical means.

A further advantageous implementation of the park brake actuator further comprises a protection cap for protecting the external excess, wherein the protection cap is manually removable to engage an external tool with the external access.

The technical advantage of the park brake actuator with a manually removable protection cap is that it allows for easy access to engage an external tool with the external access for manual release, enhancing the serviceability of the actuator in case of failure.

In a further advantageous implementation of the park brake actuator, the mechanical rotation of the shaft in the first and/or second direction is executable with an external tool.

An advantageous implementation enables the manual release of the parking brake in case of failure of the brake actuator supply or control, using only mechanical means.

A further advantageous implementation of the park brake actuator further comprises a brake head, wherein the shaft drives the brake head of the dynamic brake actuator to deploy a braking effect.

One technical advantage of the embodiment is that it the park brake force is applied by the dynamic brake actuator, which means that only one electrically or mechanically operated brake actuator is required. The parking brake is solely activated by blocking the drive shaft of the dynamic brake actuator.

In a further advantageous implementation of the park brake actuator, the locking of the shaft maintains the state of a brake head of the dynamic brake actuator.

An advantageous technical aspect of this embodiment is that it allows the park brake to remain engaged without continuous energy supply, ensuring a cost-efficient and reliable brake assembly as the actuator can hold its position in both active and passive states due to its bistable nature.

In a further advantageous implementation of the park brake actuator, a brake head of the dynamic brake actuator is adapted to continue to perform a brake function when the shaft is locked in a braked state until the shaft is unlocked again.

An advantageous implementation of the park brake actuator allows the dynamic brake actuator to maintain brake function when the shaft is locked, ensuring continuous braking until the shaft is unlocked, which enhances safety and reliability of the braking system.

A method for manually releasing a park brake actuator of the present invention (using a the park brake actuator as described above) comprises the following steps:
a) connecting an external tool to an external access of the shaft;
b) rotating the shaft with the ratchet wheel in a second direction until an outermost portion of a tooth of the ratchet wheel touches the park brake locking pawl so that the park brake locking pawl is moved into the released and unlocked position;
c) rotating the shaft with the ratchet wheel in a first direction until the brake force of the dynamic brake actuator is released.

The moving of the park brake locking pawl into the released and unlocked position is enabled by the bistable electro-magnetic actuator, optionally together with the compression spring. Hence, an easy manual release of the parking brake (and also the dynamic brake) is possible.

In an advantageous implementation, a vehicle comprises the aforementioned park brake actuator which preferably is a commercial vehicle, more preferably an electric vehicle.

The park brake actuator is a device designed to engage the park brake mechanism and maintain the vehicle in a stationary position without continuous energy supply. The park brake actuator may have two stable states, an active park brake position and a passive rest position.

The term manual release means that the park brake could be disengaged using external mechanical tools, especially in the event of a failure in the brake actuator supply or control.

The dynamic brake actuator is another component that forms part of the brake assembly and is responsible for service braking and may work in conjunction with the park brake actuator.

The ratchet wheel, locking pawl, and compression spring are mechanical components of the park brake actuator that interact to maintain or release the park brake. The components can be of any shape and made of any material. The only decisive factor is that the ratchet wheel is designed in such a way that the locking pawl can mechanically block the rotational movement of the ratchet wheel.

The sensor and sensor magnet are elements involved in detecting the position or state of the park brake actuator, contributing to the control and feedback system of the brake assembly.

The released/unlocked state of the park brake actuator is characterized by the park brake being in a position where it does not apply locking function. In this state, the park brake ratchet wheel is not engaged with the locking pawl, allowing the e-motor shaft of the dynamic brake actuator to rotate freely and the dynamic brake actuator is able to apply or release the braking force - so that the wheels can rotate freely if the braking force is completely released.

The actuated/locked state refers to the condition where the park brake actuator has been activated after the dynamic brake actuator applied a braking force, locking the e-motor shaft of the dynamic brake actuator.

The park brake system is a braking mechanism that mechanically locks the vehicle's wheels to prevent it from moving when parked or while driving, using either a hand lever, foot pedal, or electronic control to engage.

A working tooth can be designed as a sawtooth pattern or as a groove in a profile. Independent of their geometric shape, the teeth shall be formed in such a way that they can lock in one direction relative to a locking lever while being movable in the other direction.

Embodiments of the approach presented here shall be explained in greater detail in the subsequent description with reference to the figures, wherein:
- Fig. 1: shows a park brake actuator in an actuated/locked state according to an embodiment of the present invention.
- Fig. 2: shows a park brake actuator in a released/unlocked state according to an embodiment of the present invention.
- Fig. 3: shows a park brake actuator in different positions (I. (actuated/locked) to VI. (released/unlocked))- according to an embodiment of the present invention.
- Fig. 4: shows brake assembly comprising the dynamic brake actuator and the park brake actuator according to an embodiment of the present invention.
- Fig. 5: shows the manual release process of the brake assembly comprising a dynamic brake actuator and park brake actuator according to an embodiment of the present invention.

A park brake actuator 11 is a component designed to maintain a vehicle in a stationary position without the need for continuous energy supply. It operates by establishing a force transmitting connection between a dynamic brake actuator 10 and the park brake actuator 11 itself, allowing the vehicle to remain stationary in an active park brake position. Once the dynamic brake actuator applied a brake force and the park brake is engaged, this position is maintained without further energy supply or actuation forces. Additionally, the park brake actuator 11 can be manually released using mechanical means in the event of a failure of the brake actuator supply or control, ensuring a fail-safe mechanism for the park brake system. The park brake actuator 11 has a bistable solenoid/electro-magnetic actuator 5, meaning it can hold two stable positions (actively and passively) without the need for additional energy, contributing to the efficiency and reliability of the brake assembly. Furthermore, the park brake actuator 11 can be equipped with sensors to detect its states, which can be of various types such as hall, optical, or inductive.

The park brake actuator 11 comprises a park brake ratchet wheel 1 with a first radially outwardly curved side 1a and a second steep outwardly projecting side 1b, a park brake locking pawl 2, a pawl pin 3, a connection element 4, a bistable electro-magnetic actuator 5 with a moving rod 5a and a permanent magnet 5b and a electromagnet 5c, a housing 6, a compression spring 7, a sensor 8, a sensor magnet 9, a dynamic brake actuator 10, a park brake actuator 11, a protection cap 12, an external tool 13, and an E-motor shaft 14 (of the motor actuating a service brake, e.g. pressing a brake pad against a brake disc).

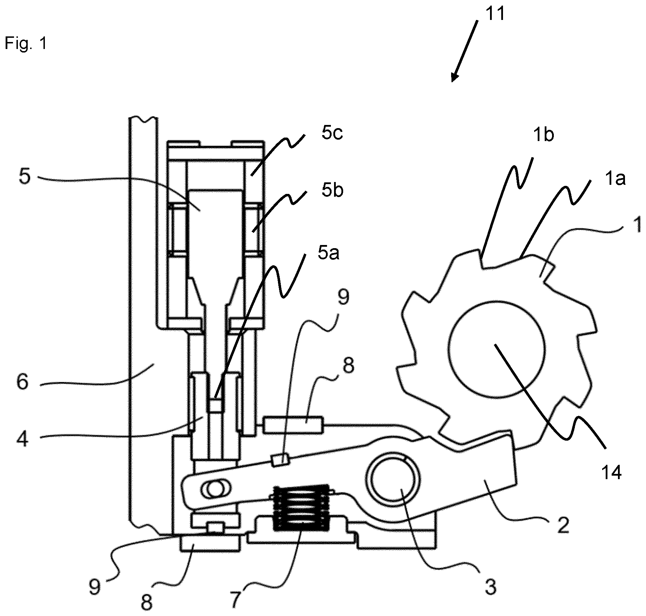

Figure 1 shows the park brake actuator 11 in its actuated or locked state, which is a configuration designed to maintain the park brake engaged without the need for continuous energy supply. The park brake ratchet wheel 1, is fixed to one of the shafts 14 of the dynamic brake actuator transmission, preferably to the e-motor shaft 14, ensuring the transmission of the braking force.

The park brake ratchet wheel 1 is an integral component of the park brake actuator 11 system, which is designed to maintain a vehicle in a stationary position without the need for continuous power supply. The park brake ratchet wheel 1 is configured to interact with the park brake locking pawl 2 to allow movement in one direction while blocking movement in the opposite direction. The sawtooth patterned teeth of the park brake ratchet wheel 1 allow the park brake locking pawl 2 to move in the release direction by sliding over the first radially outwardly curved side 1a of the teeth. In the opposite direction, the second steep outwardly projecting side 1b of the teeth prevents it from moving back, as the park brake locking pawl 2 pushes against this side and thus causes it to lock. In other words, the park brake ratchet wheel 1 works in conjunction with the park brake locking pawl 2 that engages with the teeth of the park brake ratchet wheel 1 to prevent it from rotating, thereby locking the shaft 14 and preventing the shaft 14 from turning.

The brake assembly includes an electric service brake system utilizing an electromotor (e-motor). The e-motor is part of a dynamic brake actuator 10 which is responsible for service braking. Most car brakes work by applying a force in a linear direction to press brake pads against a disc or drum. The e-motor's native rotational motion can't directly apply this linear force; hence, a conversion mechanism is needed. A mechanical transmission mechanism, i.e. linear movement transformer converts the e-motor's rotational movement into linear movement to apply brake pressure.

The park brake actuates by mechanically locking the shaft 14 of the e-motor, utilized in a vehicle's brake system. When the park brake actuator 11 engages, it mechanically blocks the e-motor shaft's 14 movement, effectively immobilizing it in its current position. Since the e-motor's shaft 14 directly or indirectly controls the application of the braking force to the wheels, locking the shaft 14 means that the applied brake pressure is maintained without requiring any additional energy input. This mechanism ensures that the vehicle's wheels remain blocked or the vehicle stays stationary until the park brake is disengaged, allowing the e-motor shaft 14 to move freely again and the dynamic brake actuator 10 can release the brake force.

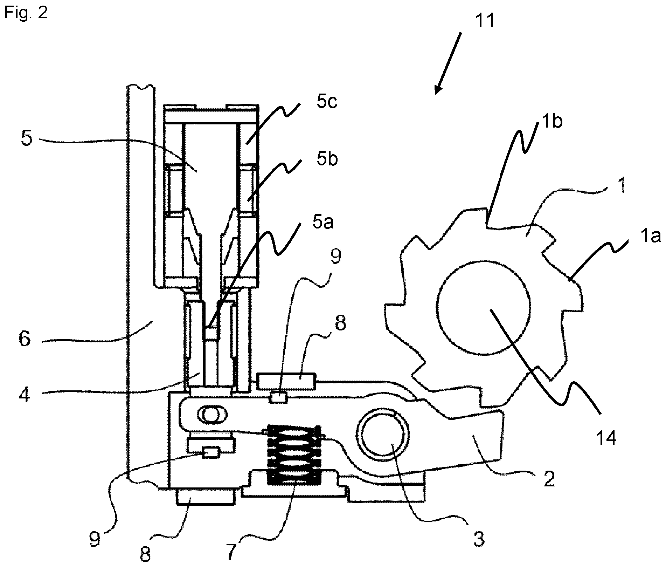

The braking force is maintained without the need for continuous energy supply due to the bistable nature of the electro-magnetic actuator 5 that is part of the system. The bistable electro-magnetic actuator 5 can hold both its "upper" and "lower" end positions without further energy supply, due to the provision of permanent magnets 5b. The electro-magnetic actuator 5 is an electromechanical device that converts electrical energy into linear mechanical motion. Unlike standard solenoids/electro-magnetic actuators, which typically require constant electrical power to maintain their position (either extended or retracted), a bistable electro-magnetic actuator has two stable states. The bistable nature of the electro-magnetic actuator 5 is achieved using permanent magnets 5b. These magnets are positioned to hold the solenoid/electro-magnetic actuator's moving rod 5a in either its extended ("upper") or retracted ("lower") position without any need for additional electrical power. In the described system, the "lower" position refers to the electro-magnetic actuator state that activates the park brake as shown in Figure 1, while the "upper" position deactivates the park brake as illustrated in Figure 2. When the electro-magnetic actuator 5 is activated by an initial electrical signal to the electromagnet 5c, the moving rod 5a moves to its new position and is held there by the magnetic force from the permanent magnets 5b. This state will remain unchanged until another electrical signal is applied to the electromagnet 5c, which reverses the solenoid/electro-magnetic actuator's position. The electrical signal to control the electromagnet 5c may, for example originate from a park brake control unit after the brake has been applied by the dynamic brake actuator 10. The bistable electro-magnetic actuator 5 is used to activate or deactivate the brake. Once the electro-magnetic actuator is engaged (by moving the moving rod 5a to the "lower" position that activates the park brake, see Figure 1), the brake will remain engaged without further electrical input, effectively locking the vehicle's wheels. This means that once the park brake is engaged, it will remain in place until an external force, such as manual release or electronic control, disengages it.

The park brake locking pawl 2, engages with the park brake ratchet wheel 1 to lock it in place, see Figure 2, and thus maintain the park brake in the actuated state. The pawl pin 3, hingedly fixes the park brake locking pawl 2 to the housing 6, allowing it to pivot and engage with the park brake ratchet wheel 1. The park brake locking pawl 2 is in contact with the connection element 4 on one side and on the other side it has a tip shaped in such a way as to engage with the teeth of the park brake ratchet wheel 1.

The connection element 4, is connected to the park brake locking pawl 2 and is guided in the housing 6, possibly by a sliding bearing (not shown here). The bistable electro-magnetic actuator 5 is responsible for moving the connection element 4, thereby controlling the position of the park brake locking pawl 2.

The housing 6, provides structural support and guides the components of the actuator.

The compression spring 7, is placed between the park brake locking pawl 2 and the housing 6, pushing the park brake locking pawl 2 towards the unlocked position and increasing the stability of the unlocked state.

The sensor 8 typically a hall, optical, or inductive type sensor, is used to detect the states of the park brake actuator. The sensor magnet 9, is fixed to the moving elements of the actuator and works in conjunction with the sensor to provide feedback on the actuator's position. In the locked state shown in Figure 1, the sensor 8 would recognize the sensor magnet 9 and output/evaluate the locked state.

Fig. 2 shows a schematic illustration of the park brake actuator 11 in its released/unlocked state, which is a configuration that allows the e-motor shaft 14 of the dynamic brake actuator 10 to rotate freely. In this state, the park brake ratchet wheel 1 is disengaged from the park brake locking pawl 2. In this state, the bistable electro-magnetic actuator 5 is moved upwards, i.e. in the 'upper' stable state. The compression spring 7 is positioned to push the locking pawl towards the unlocked position, aiding the electro-magnetic actuator in maintaining this state. In the unlocked state shown in Figure 2, the sensor 8 would recognize the distanced sensor magnet 9 and output/evaluate the unlocked state.

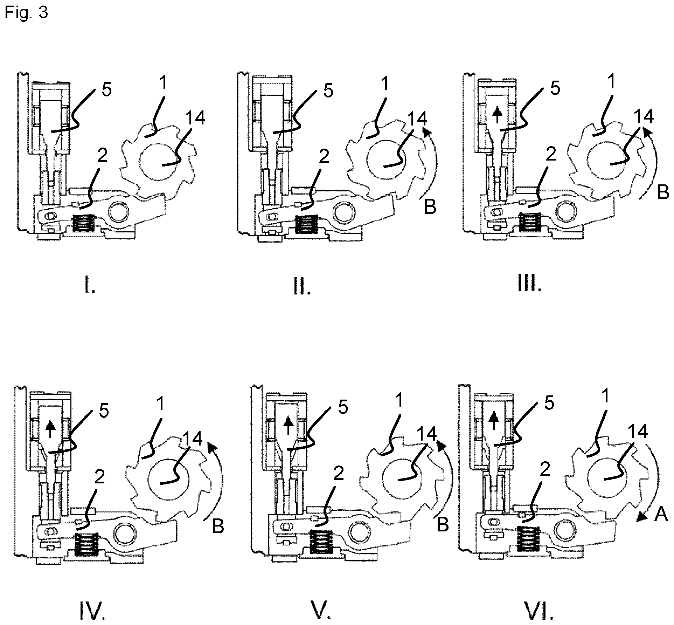

As schematically shown in Figure 3, the park brake ratchet wheel 1 can also be engaged/disengaged with the park brake locking pawl 2 manually. The manual release process involves turning the shafts 14 of the dynamic brake actuator 10 transmission, which in turn rotates the park brake ratchet wheel 1, disengaging the park brake locking pawl 2 and after that the shaft 14 can be rotated in the other direction to release the brake.

Fig. 3 shows a schematic illustration of the steps I to VI related to the manual release of the park brake actuator 11. The first direction A in Fig. 3 is clockwise, the second direction B is counter-clockwise. The first direction A is for releasing of the actuator force of the dynamic brake actuator 10 (not explicitly shown in Fig. 3) and the second direction B is for increasing the actuator force of the dynamic brake actuator 10. Step I is the initial position where the park brake is in the active or locked position, characterized by the compressed compression spring 7 and the electro-magnetic actuator 5 in the 'lower' state. In Step II, the manual release starts by turning the park brake ratchet wheel 1 and the shaft 14 of the dynamic brake actuator transmission in a second direction B which is opposite to the first direction A, which causes the next tooth of the park brake ratchet wheel 1 to touch the park brake locking pawl 2 on its first radially outwardly curved side 1a of a tooth (not explicitly labelled in Fig. 3, but in Fig. 1 and 2). In this state, the compression spring 7 supports the upward movement of the electro-magnetic actuator 5 against the strong magnetic force of the permanent magnet 5b in the stable state. During Step III, as the park brake ratchet wheel 1 is turned further, it pushes the park brake locking pawl 2 which slides along the first radially outwardly curved side 1a of a tooth, and this action causes the connection element 4 to start moving up. Step IV involves further turning of the park brake ratchet wheel 1, which continues to push the park brake locking pawl 2 and move the connection element 4 further. Step V is the manual release final step in which further turning of the park brake ratchet wheel 1 causes the outermost portion of a tooth of the ratchet wheel 1 to touch the park brake locking pawl 2, and at this position, the bistable electro-magnetic actuator 5 exerts a pull force caused by the permanent magnet 5b (not explicitly shown in Fig. 3, but in Fig. 1 and 2). Along with the push force of the compression spring, both forces move the park brake locking pawl 2 into the released and unlocked position. Finally, Step VI is the final position where the park brake is finally released or unlocked. In that step VI the shaft 14 has to be turned by the external tool 13 in the first direction A several times until the applied brake force of the dynamic brake actuator 10 (not shown in Fig. 3) is reduced to zero.

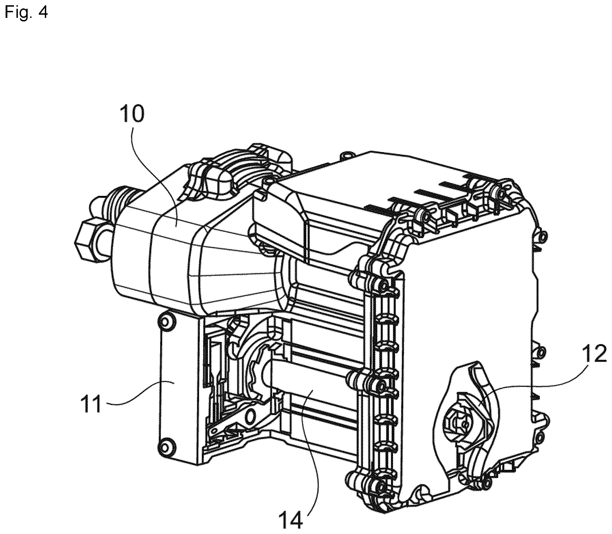

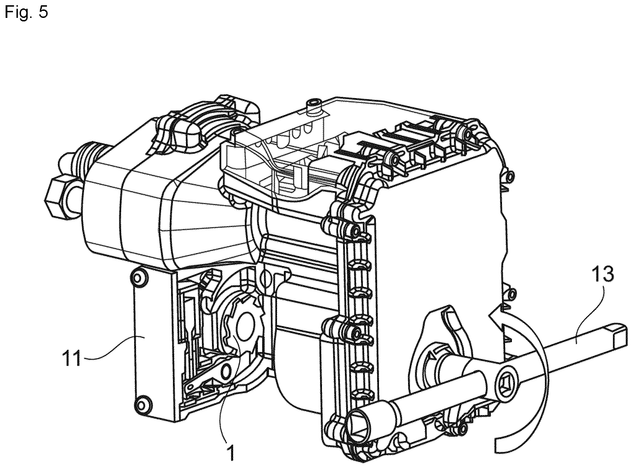

Figure 4 and 5 illustrate the brake assembly comprising several components that interact to enable both dynamic braking and park brake functionality. The dynamic brake actuator 10 is responsible for service braking during vehicle operation. The park brake actuator 11 provides the park brake function and is designed to maintain the park brake position without the need for continuous energy supply, as it is bistable and can hold two stable operation states. Additionally, the park brake actuator features an external access of the shaft 14, allowing engagement with an external tool 13 from outside of the housing 6. A protection cap 12 is provided for protecting this external access, and it is manually removable to engage the external tool with the external access. The park brake actuator forms a system together with the external tool, whereby the external tool can be used to operate the park brake actuator manually. The protection cap 12 serves to cover and protect the end of the e-motor shaft 14 when not in use. Upon removal of the protection cap 12, an external tool 13 can be connected to the e-motor shaft 14 to manually release the park brake in case of a failure of the brake actuator supply or control. This manual release process allows the park brake to be disengaged using mechanical means without the need for external electric supply. The e-motor shaft 14 is a component of the dynamic brake actuator transmission to which the park brake ratchet wheel 1 is fixed, ensuring the transmission of force for braking operations. The mechanical rotation of the shaft 14 in the second direction B can be executed with the external tool 13, facilitating the manual release of the park brake, and after that the applied brake force by the dynamic brake actuator 10 can be released by turning the shaft 14 in the first direction A (explained in Fig. 3) with the help of the external tool 13 several times until the brake force is reduced to zero.

In summary, the park brake actuator 11 is electrically driven by a bistable electro-magnetic actuator 5 which is actuated by electromagnets 5c (to move to the "upper" or "lower" position), which can hold both the "upper" and "lower" end positions without additional power supply, supported by a compression spring 7 which pushes the park brake locking pawl 2 towards the unlocked ("upper") position. This allows the actuator to remain in an active park brake position and a passive rest position without the need for an additional power supply.

In the event of a failure, after removing the protective cap, an external tool can be connected to the end of the electric motor shaft to perform the manual release process. Thereby, the park brake actuator 11 can be manually released by rotating the park brake ratchet wheel 1 by turning one of the shafts 14 of the dynamic brake actuator transmission in the second direction B to increase the applied actuator force. This moves the park brake locking pawl 2 and the connecting element 4 upwards until a tip of a teeth of the park brake ratchet wheel 1 touches the park brake locking pawl 2 and the electro-magnetic actuator 5 exerts a pulling force which, together with the compressive force of the compression spring 7, moves the park brake locking pawl 2 into the unlocked position.

The present application is not limited to the above-mentioned embodiments. Further, the locking mechanism consisting of the park brake ratchet wheel 1 and the park brake locking pawl 2 can have any geometric shape that ensure the described functionality. In addition, further sensors can be attached at any point in order to determine the status of the park brake actuator 11.

### REFERENCE SIGNS

- 1: park brake ratchet wheel
- 1a: first radially outwardly curved side
- 1b: second steep outwardly projecting side
- 2: park brake locking pawl
- 3: pawl pin
- 4: connection element
- 5: bistable (solenoid) electro-magnetic actuator
- 5a: moving rod
- 5b: permanent magnet
- 5c: electromagnet
- 6: housing
- 7: compression spring
- 8: sensor
- 9: sensor magnet
- 10: dynamic brake actuator
- 11: park brake actuator
- 12: protection cap
- 13: external tool
- 14: (e-motor) shaft

- A: first direction (clockwise)
- B: second direction (counter-clockwise)

## Claims

1. A park brake actuator (11) comprising:
a park brake ratchet wheel (1) fixed to a shaft (14) of a transmission of a dynamic brake actuator, wherein the park brake ratchet wheel (1) comprises at least one working tooth having a first radially outwardly curved side (1a) and a second steep outwardly projecting side (1b);
a park brake locking pawl (2), wherein the park brake locking pawl (2) is hingedly fixed;
a bistable electro-magnetic actuator (5) with a moving rod (5a) capable of holding two stable positions without continuous energy supply, wherein the bistable electro-magnetic actuator (5) can move the park brake locking pawl (2) into a stable locked or a stable unlocked position, wherein the park brake locking pawl (2) is interlockable with the park brake ratchet wheel (1) to maintain a locked state of the park brake actuator;
wherein in the stable locked position, a mechanical rotation of the shaft (14) in a first direction (A), which corresponds to the direction of rotation of the shaft (14) for releasing an actuating force of the dynamic brake actuator (10), is blocked by the interlocked park brake locking pawl (2) resting against the second steep outwardly projecting side (1b) of the park brake ratchet wheel (1), but wherein a mechanical rotation of the shaft (14) in a second direction (B) which is opposite to the first direction is executable by moving the first radially outwardly curved side (1a) of the park brake ratchet wheel (1) relative to the park brake locking pawl (2).

2. The park brake actuator (11) according to claim 1, further comprising:
a first stable state, and
a second stable state, wherein a displacement of the park brake locking pawl (2) by the height of the second steep outwardly projecting side (1b) causes the bistable electro-magnetic actuator (5) to switch from the first stable state to the second stable state, wherein preferably the first stable is an unlocked state so that park brake ratchet wheel (1) can move freely and wherein the second stable state is a locked state so that the park brake ratchet wheel (1) cannot move freely, wherein more preferably this displacement can be performed by manually rotating the park brake ratchet wheel (1) by rotating the shaft (14), wherein even more preferably a mechanical rotation of the shaft (14) in the second direction leads the bistable electro-magnetic actuator (5) in the first stable state, once the park brake locking pawl (2) is positioned on a radially outermost end of a tooth of the park brake ratchet wheel (1), wherein the teeth of the park brake ratchet wheel (1) are formed with a sawtooth pattern.

3. The park brake actuator (11) according to any of the previous claims, further comprising:
a connection element (4) fixed to the moving rod (5a) of the electro-magnetic actuator (5) and the park brake locking pawl (2); and preferably
a housing (6) for fixing and guiding the park brake locking pawl (2), a pawl pin (3), the connection element (4), the bistable electro-magnetic actuator (5), a compression spring (7), a sensor (8) and/or a sensor magnet (9).

4. The park brake actuator (11) according to any of the previous claims, further comprising:
a compression spring (7) fixed to the housing (6) and to the park brake locking pawl (2), wherein preferably the compression spring (7) biases the park brake locking pawl (2) into the stable unlocked position, wherein more preferably the compression spring (7) is unloaded when the stable state of the bistable electro-magnetic actuator (5) is reached in the stable unlocked position.

5. The park brake actuator (11) according to any one of the previous claims, wherein the bistable electro-magnetic actuator (5) further comprises at least one permanent magnet (5b) and at least one electromagnet (5c), wherein preferably the electromagnet (5c) is used to move the bistable electro-magnetic actuator (5) in the stable locked or stable unlocked position, and the permanent magnet (5b) is used to hold the bistable electro-magnetic actuator (5) in the stable locked or stable unlocked position, wherein more preferably the electromagnet (5c) can be controlled via a park brake control unit to activate or deactivate the park brake, wherein even more preferably the permanent magnet (5b) and electromagnet (5c) are ring-shaped.

6. The park brake actuator (11) according to any of the previous claims, wherein the bistable electro-magnetic actuator (5) is configured so that no further external energy is required to maintain the stable locked or stable unlocked position.

7. The park brake actuator (11) according to claims 5 or 6, wherein the magnetic force of the permanent magnet (5b) is greater than the spring force of the compression spring (7).

8. The park brake actuator (11) according to any of the previous claims, further comprising:
a sensor (8) placed on the housing (6) and a sensor magnet (9) placed on the park brake locking pawl (2) and / or connection element (4), wherein the sensor (8) is configured to detect a state of the sensor magnet (9), wherein preferably the state of the sensor magnet (9) indicates a locked or unlocked state of the bistable electro-magnetic actuator (5).

9. The park brake actuator (11) according to any of the previous claims, further comprising:
an external access of the shaft (14);
wherein the external access of the shaft (14) from the outside of the housing (6) in engageable with an external tool (13).

10. The park brake actuator (11) according to claim 9, further comprising:
a protection cap (12) for protecting the external access of the shaft (14), wherein the protection cap (12) is manually removable to engage the external tool with the external access.

11. The park brake actuator (11) according to claims 9 or 10, wherein the mechanical rotation of the shaft (14) in the first and/or second direction is executable with an external tool (13).

12. The park brake actuator (11) according to any of the previous claims, further comprising:
a brake head, wherein the shaft (14) drives the brake head of the dynamic brake actuator (10) to deploy a braking effect.

13. The park brake actuator (11) according to any of the previous claims, wherein the locking of the shaft (14) maintains the state of a brake head of the dynamic brake actuator (10).

14. The park brake actuator (11) according to claim 13, wherein a brake head of the dynamic brake actuator (10) id adapted to continue to perform a brake function when the shaft (14) is locked in a braked state until the shaft (14) is unlocked again.

15. A method for manually releasing a park brake actuator (11) according to one of claims 1 to 8, comprising the following steps:
a) connecting an external tool (13) to an external access of the shaft (14);
b) rotating the shaft (14) with the ratchet wheel (1) in a second direction (B) until an outermost portion of a tooth of the ratchet wheel (1) touches the park brake locking pawl (2) so that the park brake locking pawl (2) is moved into the released and unlocked position;
c) rotating the shaft (14) with the ratchet wheel (1) in a first direction (A) until the brake force of the dynamic brake actuator (10) is released.

16. A vehicle, comprising a park brake actuator (11) according to one of claims 1 to 14, which preferably is a commercial vehicle, more preferably an electric vehicle.
